(19) Europäisches Patentamt
European Patent Office
Office européen des brevets

(11) Veröffentlichungsnummer: **0 001 249**
**B1**

(12) # EUROPÄISCHE PATENTSCHRIFT

(21) Anmeldenummer: **78100857.8**

(22) Anmeldetag: **09.09.78**

(51) Int. Cl.³: **C 07 C 97/24, //**
C 09 B 1/26, C 08 K 5/18

(54) **Verfahren zur Herstellung substituierter 1-Aminoanthrachinone**

(30) Priorität: **24.09.77 DE 2743064**

(43) Veröffentlichungstag der Anmeldung:
**04.04.79 Patentblatt 79/07**

(45) Bekanntmachung des Hinweises auf die Patenterteilung:
**01.10.80 Patentblatt 80/20**

(84) Benannte Vertragsstaaten:
**BE CH DE FR GB LU NL**

(56) Entgegenhaltungen:
**CH - A - 478 185**
**DE - C - 136 777**
**DE - C - 144 634**
**CHEMICAL ABSTRACTS, vol. 83, no. 14, 7 oct. 1975, Columbus, Ohio, USA, Seite 159, Spalte 2, Zusammenfassung no. 11659N**
**CHEMICAL ABSTRACTS, vol. 85, no. 22, 29 november 1976, Columbus, Ohio, USA, Seite 96, Spalte 2, Zusammenfassung no. 161.885N**

(73) Patentinhaber: **BAYER AG**
**Zentralbereich Patente, Marken und Lizenzen,**
**D - 5090 Leverkusen 1, Bayerwerk (DE)**

(72) Erfinder: **Reubke, Karl-Julius, Dr.,**
**Rybniker Strasse 10,**
**5000 Köln 80 (DE)**
**Dürholz, Friedrich, Dr.**
**Knusthöhe 40**
**D - 5630 Remscheid 11 (DE)**

**EP 0 001 249 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung substituierter 1-Aminoanthrachinone

Die vorliegende Erfindung betrifft ein neues Verfahren zur Herstellung von substituierten 1-Aminoanthrachinonen aus 1-Nitroanthrachinon durch Umsetzung mit substituierten Aminen in Gegenwart von Wasser.

Es ist bekannt, daß sich 1-Nitroanthrachinon mit Aminen zu den entsprechenden substituierten 1-Aminoanthrachinonen umsetzen läßt. Diese Reaktion kann in Alkohol (s. DT—PS 136 777), in Pyridin (s. DT—PS 144 634) oder in aromatischen Lösungsmitteln (s. JA—OS 75/63017) durchgeführt werden. In der JA—OS 76/92829 ist diese Umsetzung in Gegenwart von Wasser beschrieben, wobei das 1-Nitroanthrachinon vor der Reaktion auf eine mittlere Partikelgröße von kleiner als 10 Mikron, zu pulverisieren ist (beispielsweise durch Perlmahlung) und die Reaktionskomponenten gemeinsam auf Reaktionstemperatur gebracht werden.

Es wurde nun ein Verfahren zur Herstellung von substituierten 1-Aminoanthrachinonen durch Umsetzung von 1-Nitroanthrachinon mit Aminen der allgemeinen Formel

$$HNR_1R_2,$$

worin

$R_1$ für Wasserstoff oder einen Alkylrest und

$R_2$ für einen Alkyl-, Aryl- oder Aralkylrest steht,

in wäßriger Suspension bei erhöhter Temperatur und gegebenenfalls in Gegenwart von alkalischen Neutralisationsmitteln gefunden, das dadurch gekennzeichnet ist, daß man 1-Nitroanthrachinon mit einer mittleren Partikelgröße von über 100 Mikron verwendet und das 1-Nitroanthrachinon und das Amin bei Reaktionstemperatur zusammengibt.

In das erfindungsgemäße Verfahren kann auf beliebige Weise hergestelltes 1-Nitroanthrachinon eingesetzt werden, beispielsweise ist 1-Nitroanthrachinon geeinget, das durch Nitrierung von Anthrachinon mit Salpetersäure, gegebenenfalls in Gegenwart von Schwefelsäure und/oder anderen Säuren und/oder Lösungsmitteln, erhalten worden ist. Da die Reinheit der erfindungsgemäß herstellbaren substituierten 1-Aminoanthrachinone wesentlich durch die Reinheit des eingesetzten 1-Nitroanthrachinons bestimmt wird, wird in das erfindungsgemäße Verfahren vorzugsweise 1-Nitroanthrachinon eingesetzt, das nach seiner Herstellung noch ein Reinigungsverfahren durchlaufen hat, beispielsweise eine Behandlung mit geeigneten Lösungsmitteln (z.B. Nitrobenzol, Tetramethylensulfon oder N-Methylpyrrolidon) oder eine Destillation. Das 1-Nitroanthrachinon, das beispielsweise nach einer Behandlung von rohem 1-Nitroanthrachinon mit Nitrobenzol, Tetramethylensulfon oder N-Methylpyrrolidon erhalter wird, eignet sich sehr gut als Einsatzprodukt in das erfindungsgemäße Verfahren. Wenn man die Destillation als Reinigungsmethode für rohes 1-Nitroanthrachinon anwendet, kann man ein für den Einsatz in das erfindungsgemäße Verfahren sehr gut geeignetes 1-Nitroanthrachinon erhalten, wenn man das heiße, flüssige Destillat in Wasser einlaufen läßt. Man kann das Destillat jedoch auch abkühlen, kristallisieren lassen und dann grob zerkleinern.

Es ist ein wesentliches Merkmal des erfindungsgemäßen Verfahrens, daß die mittlere Korngröße des eingesetzen 1-Nitroanthrachinons über 100 Mikron, vorzugsweise über 500 Mikron beträgt. Die Obergrenze der mittleren Korngröße ist nicht kritisch; sie ist praktisch nur durch die Dosiereinrichtungen beschränkt. Man kann beispielsweise 1-Nitroanthrachinon einsetzen, das eine mittlere Korngröße von ungefähr 0,1 bis 2 mm aufweist.

Amine, die in das erfindungsgemäße Verfahren eingesetzt werden können, entsprechen der allgemeinen Formel

$$HNR_1R_2,$$

worin

$R_1$ für Wasserstoff oder einen Alkylrest und

$R_2$ für einen Alkyl-, Aryl- oder Aralkylrest steht.

Geeignete Alkylreste $R_1$ und $R_2$ sind z.B. geradkettige, verzweigte oder cyclische Kohlenwasserstoffreste mit 1 bis 18, vorzugsweise 1 bis 6 C-Atomen, die gegebenenfalls durch Halogen, Hydroxy, Alkoxy, Dialkylamino oder Cyan weiter substituiert sein können. Als Beispiele für die Reste $R_1$ und $R_2$ seien genannt:

Methyl, Äthyl, n-Propyl, iso-Propyl, n-, iso- oder tert.-Butyl, n-, iso- oder tert.-Amyl, n- oder iso-Hexyl, n-Dodecyl, β-Chloräthyl, β,β,β-Trifluoräthyl, β,γ-Dichlorpropyl, β-Cyanoäthyl, β-Cyanoäthoxyäthyl, β-Methoxyäthyl, Methoxybutyl, β-Hydroxyäthyl, β,γ-Hydroxypropyl, β-Diäthylaminoäthyl, γ-Dimethylaminopropyl, Cyclopentyl, Cyclohexyl, Cycloheptyl, gegebenenfalls durch $C_{1-4}$-Alkyl, Hydroxy, $C_{1-4}$-Alkoxy, $C_{1-6}$-Dialkylamino, Chlor oder Brom substituiert.

Geeignete Arylreste $R_2$ sind z.B. solche mit 6 bis 14, vorzugsweise 6 bis 10, C-Atomen, die gegebenenfalls durch Alkyl, Halogen, Hydroxy, Alkoxy, Diätalkylamino oder Cyan weiter substituiert sein können. Als Beispiele für Arylreste $R_2$ seien genannt: Phenyl, Naphthyl, Methylphenyl, Äthylphenyl, Butylphenyl, Propylphenyl, 2,5- oder 2,6-Dimethylphenyl, 2,4,6-Trimethylphenyl, 2-Methyl-4-tert.-butylphenyl, 1-Isopropyl-5-methylphenyl, Nonylphenyl, Dodecylphenyl, Methoxyphenyl, Äthoxyphenyl, Isopropoxyphenyl, Phenoxyphenyl, Diäthoxyphenyl, 2,5- oder 2,6-Dichlorphenyl, Chlorphenyl, Bromphenyl, Fluorphenyl, 2,4,6-Tri-

bromphenyl, Trifluormethylphenyl, Hydroxyäthylphenyl, 2-Methyl-4-chlorphenyl, 2-Methoxy-4-chlorphenyl, 2-Methoxy-5-Methylphenyl, 3-Methoxy-4-bromphenyl, 2-Brom-4-tert.-butylphenyl und 4-Brom-2-isopropylphenyl.

Geeignete Aralkylreste $R_2$ sind z.B. Phenyl-$C_{1-8}$-alkylreste die im Phenylrest durch Chlor, Fluor, Brom, $C_{1-4}$-Alkyl, $C_{1-4}$-Alkoxy, Amino, Nitro und $C_{2-5}$-Alkylcarbonylamino substituiert sein können. Als Beispiele für Aralkylreste $R_2$ seien genannt: Phenylmethyl, $\alpha$- oder $\beta$-Phenyläthyl, $\gamma$-Phenylpropyl, $\gamma$-Phenyl-$\alpha$-methylpropyl, $\gamma$-Phenyl-$\alpha,\gamma,\gamma$-trimethylpropyl, $\alpha$-Isopropyl-$\gamma$-phenylpropyl, $\alpha$-Cyclohexyl-$\gamma$-phenylpropyl und $\alpha$-($\beta$-phenyläthyl)-$\gamma$-methylbutyl.

Bevorzugt werden solche primären Amine eingesetzt, bei denen in der oben angegebenen Formel $R_1$ Wasserstoff entspricht und $R_2$ einen der obengenannten Alkylreste bedeutet. Besonders bevorzugt sind dabei solche Alkylreste, die 1 bis 6 C-Atome enthalten und keine weiteren Substituenten tragen, ganz besonders bevorzugt wird Methylamin, Isopropylamin oder t-Butylamin in das erfindungsgemäße Verfahren eingesetzt.

Die in das erfindungsgemäße Verfahren eingesetzte Menge an Amir kann beispielsweise 1 bis 5 Mol pro Mol 1-Nitroanthrachinon betragen. Vorzugsweise werden 1 bis 2 Mol, besonders bevorzugt 1 bis 1,5 Mol Amin pro Mol 1-Nitroanthrachinon eingesetzt. Die Amine können in handelsüblicher Reinheit verwendet werden.

Es ist ein wesentliches Merkmal des erfindungsgemäßen Verfahrens, daß man das 1-Nitroanthrachinon und das Amin bei Reaktionstemperatur zusammengibt. Vorzugsweise wird dabei das 1-Nitroanthrachinon in Form einer wäßrigen Suspension und das Amin als solches oder in Form einer wäßrigen Lösung eingesetzt. Das gegebenenfalls mit einzubringende Neutralisationsmittel wird im allgemeinen zusammen mit dem Amin oder separat eingebracht.

Man kann beispielsweise so verfahren, daß man eine Mischung aus dem Amin, Wasser und gegebenenfalls Neutralisationsmittel vorlegt, auf Reaktionstemperatur erhitzt und dann 1-Nitroanthrachinon in Form einer wäßrigen Suspension zugibt. Vorzugsweise legt man jedoch 1-Nitroanthrachinon in Form einer wäßrigen Suspension vor, erhitzt diese auf Reaktionstemperatur und gibt dann das Amin und gegebenenfalls das Neutralisationsmittel zu.

Die Zugabe der nicht vorgelegten Reaktionskomponente erfolgt zweckmäßigerweise kontinuierlich oder in kleinen Portionen während der Reaktionszeit. Die Temperatur der nicht vorgelegten Reaktionskomponente kann beliebig gewählt werden, beispielsweise zwischen 0°C und Reaktionstemperatur. Es ist vorteilhaft, die nicht vorgelegte Reaktionskomponente mit einer tieferen Temperatur als der Reaktionstemperatur einzuspeisen, beispielsweise bei 0 bis 50°C. In diesem Falle, insbesondere wenn gleichzeitig Wasser mit zugegeben wird, muß dann weniger oder praktisch keine Reaktionswärme nach außen abgeführt werden. Es kann vorteilhaft sein, nach Ablauf der Reaktionszeit den Ansatz noch einige Zeit bei Reaktionsbedingungen zu rühren, beispielsweise 10 Minuten bis 4 Stunden.

Vorzugsweise werden in das erfindungsgemäße Verfahren neben 1-Nitroanthrachinon und dem jeweiligen Amin eines oder mehrere alkalische Neutralisationsmittel zugefügt. Als alkalische Neutralisationsmittel kommen anorganische, vorzugsweise wasserlösliche Neutralisationsmittel mittlerer bis schwacher Basizität in Frage, beispielsweise Alkalicarbonate und/oder Alkalihydrogencarbonate, wie Soda, Pottasche, Natriumhydrogencarbonat und/oder Kaliumhydrogencarbonat. Das oder die alkalischen Neutralisationsmittel können beispielsweise in Mengen von 1 bis 5 Äquivalenten pro Mol 1-Nitroanthachinon, vorzugsweise in Mengen von 1 bis 2,5 Äquivalenten pro Mol 1-Nitroanthrachinon eingesetzt werden. Vorzugsweise werden derartige Neutralisationsmittel zusammen mit dem Amin in wässriger Lösung zugefügt.

Wenn in das erfindungsgemäße Verfahren mehr als 2 Mol Amin pro Mol 1-Nitroanthrachinon eingesetzt werden, so kann auf den Zusatz von alkalischen Neutralisationsmitteln verzichtet werden, wobei dann während der Reaktion höhere Drucke auftreten und größere Wärmemengen abzuführen sind. Außerdem bilden sich dann zwangsläufig Nebenprodukte aus dem Amin und der bei der Reaktion entstehenden salpetrigen Säure, insbesondere Alkohole und/oder Olefine, die gegebenenfalls aus dem Abwasser zu entfernen sind.

Die Reaktionstemperatur beim erfindungsgemäßen Verfahren kann zwischen 100 und 220°C, vorzugsweise zwischen 150 und 190°C liegen. Die Reaktionszeit richtet sich nach der Reaktivität des Amins. Sie liegt im allgemeinen bei aliphatischen Aminen zwischen 0,5 und 6 Stunden, bei aromatischen Aminen zwischen 4 und 12 Stunden.

Das erfindungsgemäße Verfahren wird im allgemeinen in einem geschlossenen Gefäß durchgeführt, wobei sich vor Zugabe der zweiten Reaktionskomponente Drucke im Bereich von beispielsweise 1 bis 25 bar einstellen können, die während der Reaktion beispielsweise auf 8 bis 80 bar ansteigen können. Bevorzugt wird die Reaktion bei Drucken von 8 bis 60 bar, insbesondere bei Drucken von 10 bis 40 bar durchgeführt. Selbstverständlich ist es auch möglich, im geschlossenen Gefäß nicht nur unter dem sich selbst einstellenden Druck zu arbeiten, sondern den Druck auch innerhalb der angegebenen Grenzen durch Entspannung oder Inertgaszugabe einzustellen.

Das erfindungsgemäße Verfahren kann kontinuierlich oder diskontinuierlich durchgeführt werden. Vorzugsweise wird es diskontinuierlich in einem Rührautoklaven durchgeführt. Dabei wird vorzugsweise eine wäßrige Suspension von 1-Nitroanthrachinon, die 10 bis 75 Gew.-%, vorzugsweise 30 bis 50 Gew.-%, 1-Nitroanthrachinon enthält auf die Reaktionstemperatur aufgeheizt. Sofern ein wasserlösliches Amin eingesetzt wird, kann dann das Amin in wäßriger Lösung, vorzugsweise zusammen mit alkalischen Neutralisationsmitteln, in das Reaktionsgefäß eingebracht werden, in dem sich die auf Reaktionstemperatur gehaltene Suspension von 1-Nitroanthrachinon in Wasser befindet. Werden Amine eingesetzt, die sich nicht in hinreichenden Mengen in Wasser oder wäßrigen Lösungen der alkalischen Neutralisierungsmittel lösen (z.B. Anilin), so kann man so verfahren, daß man gleichzeitig an verschiedenen Stellen das Amin und das Wasser bzw. eine wäßrige Lösung, welche alkalische Neutralisierungsmittel enthält, in das Reaktionsgefäß einbringt. Für die Temperatur, mit der dann das Wasser bzw. die wäßrige Lösung, welche alkalische Neutralisierungsmittel enthält, eingebracht wird, gilt das zuvor für die Temperatur des Amins bzw. der Aminlösung gesagte entsprechend. Nach Beendigung der Reaktion liegen im Reaktionsgefäß 2 flüssige Phasen vor, nämlich eine wäßrige Phase und eine aus geschmolzenem substituierten 1-Aminoanthrachinon bestehende Phase. Die Aufarbeitung kann nach an sich bekannten Verfahren erfolgen. Vorzugsweise wird das substituierte 1-Aminoanthrachinon in geschmolzener Form aus dem Druckgefäß entnommen und, z.B. durch eine Düse, auf kaltes Wasser gegeben, wobei eine gut filtrierbare Suspension erhalten wird, aus der die festen Bestandteile abgesaugt und getrocknet werden können. Das aus dem Reaktionsgefäß entnommene geschmolzene, substituierte 1-Aminoanthrachinon kann auch über eine Kühlwalze geführt und so in fester Form gewonnen werden.

Eine bevorzugte Ausführungsform des erfindungsgemäßen Verfahrens sei im folgenden anhand der Herstellung von 1-Methylaminoanthrachinon beschrieben:

1 Gew.-Teil 1-Nitroanthrachinon wird in einem 7 bis 11 Gew.-Teile fassenden Rührautoklaven mit 1,5 bis 2,5 Teilen Wasser unter Rühren auf eine Temperatur im Bereich von beispielsweise 160 bis 180°C aufgeheizt. Dann werden 2,5 bis 3 Gew.-Teile einer zuvor bereiteten Lösung bestehend aus 0,15—0,17 Gew.-Teilen Methylamin, 0,15—0,20 Gew.-Teilen Natriumcarbonat, 0,10—0,15 Gew.-Teilen Natriumhydrogencarbonat und 2,1—2,6 Gew.-Teilen Wasser innerhalb von beispielsweise 3 bis 5 Stunden zugepumpt. Man läßt noch einige Zeit nachreagieren und entnimmt dann dem Reaktionsgefäß das geschmolzene 1-Methylaminoanthrachinon über ein beheiztes Steigrohr und führt es in einen Sprühtopf, in dem im Gegenstrom kaltes Wasser eingeführt wird. Die Wassermenge wird beispielsweise so dosiert, daß eine Suspension mit 10 bis 20 Gew.-% Feststoffgehalt (=1-Methylaminoanthrachinon) erhalten wird, die man anschließend in üblicher Weise filtriert und trocknet oder direkt in einen Sprühtrockner einführt.

Das erfindungsgemäße Verfahren besitzt ein Reihe von überraschenden Vorteilen. So ist es beim erfindungsgemäßen Verfahren nicht erforderlich, das eingesetzte 1-Nitroanthrachinon durch eine besonders aufwendige Mahlung auf eine sehr kleine mittlere Korngröße zu bringen. Es kann so eingesetzt werden, wie es nach üblichen Herstellungs- und Reinigungs-methoden erhalten wird.

Ein weiterer Vorteil des erfindungsgemäßen Verfahrens ist, daß es mit relativ geringen Aminmengen durchgeführt werden kann, beispielsweise mit weniger als 2 Mol Amin pro Mol Nitroanthrachinon. Bei dieser Arbeitsweise entstehen keine oder nur geringe Mengen an Nebenprodukten (z.B. Alkohol und/oder Olefin) und die Wärme- und Stickstoffentwicklung während der Reaktion ist dann gering. Weiterhin kann beim erfindungsgemäßen Verfahren auf den Zusatz von Dispergiermitteln verzichtet werden. Nach dem erfindungsgemäßen Verfahren sind substituierte 1-Aminoanthrachinone in hoher Reinheit und hoher Ausbeute zugänglich.

Substituierte 1-Aminoanthrachinone, wie sie im erfindungsgemäßen Verfahren erhalten werden können, beispielsweise Methyl- und Isopropylaminanthrachinon sind begehrte Farbstoffe zum Anfärben von Kunststoffen in der Masse und können auch als Farbstoffzwischenprodukte weiterverarbeitet werden. 1-Methylaminoanthrachinon wird als Disperse Red 9 bzw. Solvent Red 111 unter der Formel Nr. 60505 im Colour Index geführt. Die Weiterverarbeitung von 1-Methyl- und 1-Isopropylaminoanthrachinon zu beispielsweise Säurefarbstoffen ist in Ullmanns Encyklopädie der technischen Chemie, 4. Auflage, Band 7, Seite 641, Weinheim (1973), beschrieben.

Beispiel 1

75 g 1-Nitroanthrachinon 98,5%ig, das durch Destillation gereinigt, anschließend gebrochen und grob auf eine mittlere Korngröße von 1 mm gemahlen worden war, wurde in 160 ml Wasser in einem 0,7 1-Rührautoklav auf 190°C geheizt. Dann wurden innerhalb von 4 Stunden 240 ml einer Lösung aus 24,5 g Isopropylamin 100%ig und 16 g Soda in Wasser mit 25°C zugepumpt. Der Druck steigt von 11 auf 40 bar. Man ließ noch 30 Minuten nachreagieren, kühlte ab, entspannte und isolierte das Produkt durch Filtration. Nach Trocknung: 77,5 g 97,5%iges 1-Isopropylaminoanthrachinon (1% 1-Aminoanthrachinon), das entspricht 97,7% der Theorie.

Beispiel 2

14 kg 1-Nitroanthrachinon 98%ig, das durch Kristallisation aus Tetramethylensulfon gereinigt wurde und eine mittlere Korngröße von 0,2—0,3 mm aufwies und 21 kg Wasser wurden im 150 1-Stahlautoklaven vorgelegt und auf 170°C geheizt. Innerhalb von 4 Stunden wurden 40 kg einer 20°C warmen Lösung aus 2,1 kg Methylamin 100%ig, 2,75 kg $Na_2CO_3$ und 1,85 kg $NaHCO_3$ in Wasser zugepumpt. Der Druck stieg von anfänglich 7 bis 8 bar auf etwa 12 bar. Man ließ noch eine halbe Stunde nachreagieren, ließ ohne Rühren 5 Minuten absitzen und drückte den Autoklaveninhalt über ein beheiztes Steigrohr durch eine Düse auf kaltes Wasser. Die überlaufende Suspension wurde abgesaugt und getrocknet. Ausbeute: 12,9 kg 97,5%iges 1-Methylaminoanthrachinon, das entspricht 97,9% der Theorie.

Beispiel 3

14 kg 1-Nitroanthrachinon 98%ig, das durch Behandlung mit Nitrobenzol gereinigt wurde und eine mittlere Korngröße von 0,1 bis 0,2 mm aufwies und 21 kg Wasser wurden wie in Beispiel 2 vorgelegt und aufgeheizt. Aus einer Vorlage wurden 10,6 kg 34%ige Methylaminlösung innerhalb von 2 Stunden und gleichzeitig aus einer anderen Vorlage etwa 29 kg Wasser von 10—12°C so zugepumpt, daß die Temperatur von 170°C gehalten wurde. Der Druck stieg dabei von 7 bis 8 auf 18 bis 20 bar an. Der Ansatz wurde noch 10 Minuten gerührt, über ein Druckminderventil wurde auf 10 bar entspannt. Man ließ absitzen und arbeitete wie in Beispiel 2 weiter. Ausbeute: 13,0 kg 97,2%iges 1-Methylaminoanthrachinon, das entspricht 98,3% der Theorie.

Beispiel 4

Eine Suspension, hergestellt aus 920 g 1-Nitroanthrachinon 98%ig mit einer mittleren Korngröße von 0,2—0,3 mm und 2 l Wasser wurde in einem 10 l-Autoklaven auf 180°C geheizt. In 2 Stunden wurden dann 3,5 l einer Lösung aus 542 g t-Butylamin, 97 g $NaHCO_3$ und 195 g $Na_2CO_3$ mit einer Temperatur von 20°C zugepumpt. Der Druck stieg auf 13 bar. Man ließ noch 1/2 Stunde nachreagieren und drückte die organische Phase über ein beheiztes Steigrohr auf 5 l Wasser. Die erhaltene Suspension wurde filtriert, das Produkt gewaschen und getrocknet. Ausbeute: 990 g 96,6%iges 1-t-Butylaminoanthrachinon, das entspricht 96,2% der Theorie.

## Patentansprüche

1. Verfahren zur Herstellung von substituierten 1-Aminoanthrachinonen durch Umsetzung von 1-Nitroanthrachinon mit Aminen der allgemeinen Formel

$$HNR_1R_2,$$

worin

$R_1$ für Wasserstoff oder einen Alkylrest und

$R_2$ für einen Alkyl-, Aryl- oder Aralkylrest steht,

in wäßriger Suspension bei erhöhter Temperatur und gegebenenfalls in Gegenwart von alkalischen Neutralisationsmitteln, dadurch gekennzeichnet, daß man 1-Nitroanthrachinon mit einer mittleren Partikelgröße von über 100 Mikron verwendet und das 1-Nitroanthrachinon und das Amin bei Reaktionstemperatur zusammengibt.

2. Verfahren nach Anspruch 1, dadurch gekennzeichnet, daß man 1-Nitroanthrachinon in Form einer wäßrigen Suspension vorlegt, diese auf Reaktionstemperatur erhitzt und dann das Amin zugibt.

3. Verfahren nach Anspruch 1 und 2, dadurch gekennzeichnet, daß man als Amin Methylamin, Isopropylamin oder t-Butylamin einsetzt.

4. Verfahren nach Ansprüchen 1 bis 3, dadurch gekennzeichnet, daß man 1-Nitroanthrachinon mit einer mittleren Partikelgröße von über 500 Mikron einsetzt.

5. Verfahren nach Ansprüchen 1 bis 4, dadurch gekennzeichnet, daß man die Reaktion bei einer Temperatur zwischen 100 und 220°C durchführt.

6. Verfahren nach Ansprüchen 1 bis 5, dadurch gekennzeichnet, daß man als alkalisches Neutralisationsmittel ein anorganisches wasserlösliches Neutralisationsmittel mittlerer bis schwacher Basizität zufügt.

7. Verfahren nach Ansprüchen 1 bis 6, dadurch gekennzeichnet, daß man als alkalisches Neutralisationsmittel Soda, Pottasche, Natriumhydrogencarbonat und/oder Kaliumhydrogencarbonat zufügt.

8. Verfahren nach Ansprüchen 1 bis 7, dadurch gekennzeichnet, daß man das Amin in wäßriger Lösung zusammen mit einem alkalischen Neutralisationsmittel zufügt.

9. Verfahren nach Ansprüchen 1 bis 7, dadurch gekennzeichnet, daß man das Amin einerseits und eine wäßrige Lösung, die alkalische Neutralisationsmittel enthält, getrennt zufügt.

10. Verfahren nach Ansprüchen 2 bis 9, dadurch gekennzeichnet, daß man das Amin bzw. die Aminlösung mit einer Temperatur im Bereich 0 bis 50°C zufügt.

## Claims

1. Process for the preparation of substituted 1-aminoanthraquinones by reacting 1-nitroanthraquinone with amines of the general formula

$$HNR_1R_2$$

wherein

$R_1$ represents hydrogen or an alkyl radical and

$R_2$ represents an alkyl, aryl or aralkyl radical, in aqueous suspension at elevated temperature and optionally in the presence of alkaline neutralising agents, characterised in that 1-nitroanthraquinone with an average particle size of over 100 microns is used and that 1-nitroanthraquinone and the amine are mixed together at the reaction temperature.

2. Process according to Claim 1, characterised in that 1-nitroanthraquinone is initially introduced in the form of an aqueous suspension followed by heating to the reaction temperature followed by introducing the amine.

3. Process according to Claims 1 and 2, characterised in that methylamine, isopropylamine or t-butylamine is employed as the amine.

4. Process according to Claims 1 to 3, characterised in that 1-nitroanthraquinone with an average particle size of over 500 microns is employed.

5. Process according to Claims 1 to 4, characterised in that the reaction is carried out at a temperature between 100 and 220°C.

6. Process according to Claims 1 to 5, characterised in that an inorganic water-soluble neutralising agent of medium to weak basicity is added as the alkaline neutralising agent.

7. Process according to Claims 1 to 6, characterised in that sodium carbonate, potassium carbonate, sodium bicarbonate and/or potassium bicarbonate is added as the alkaline neutralising agent.

8. Process according to Claims 1 to 7, characterised in that the amine is added in aqueous solution together with an alkaline neutralising agent.

9. Process according to Claims 1 to 7, characterised in that the amine on the one hand and an aqueous solution which contains alkaline neutralising agents are added separately.

10. Process according to Claims 2 to 9, characterised in that the amine, or the amine solution, is added with a temperature in the range from 0 to 50°C.

**Revendications**

1. Procédé de préparation de 1-aminoanthraquinones substituées par réaction de 1-nitroanthraquinone avec des amines de formule générale:

$$HNR_1R_2$$

dans laquelle

$R_1$ représente un atome d'hydrogène ou un groupe alkyle, et

$R_2$ représente un groupe alkyle, un groupe aryle ou un groupe aralkyle,

en suspension aqueuse, à une température élevée et éventuellement en présence d'agents de neutralisation alcalins, caractérisé en ce qu'on utilise de la 1-nitroanthraquinone dont les particules ont une granularité moyenne supérieure à 100 microns, tandis que l'on charge la 1-nitro-anthraquinone et l'amine ensemble à la température réactionnelle.

2. Procédé suivant la revendication 1, caractérisé en ce qu'on dépose préalablement la 1-nitroanthraquinone sous forme d'une suspension aqueuse que l'on chauffe à la température réactionnelle, après quoi on ajoute l'amine.

3. Procédé suivant l'une quelconque des revendications 1 et 2, caractérisé en ce que, comme amine, on utilise la méthylamine, l'isopropylamine ou la t-butylamine.

4. Procédé suivant l'une quelconque des revendications 1 à 3, caractérisé en ce qu'on utilise de la 1-nitro-anthraquinone dont les particules ont une granularité moyenne supérieure à 500 microns.

5. Procédé suivant l'une quelconque des revendications 1 à 4, caractérisé en ce qu'on effectue la réaction à une température comprise entre 100 et 220°C.

6. Procédé suivant l'une quelconque des revendications 1 à 5, caractérisé en ce que, comme agent de neutralisation alcalin, on ajoute un agent de neutralisation inorganique hydrosoluble d'une basicité moyenne à faible.

7. Procédé suivant l'une quelconque des revendications 1 à 6, caractérisé en ce que, comme agent de neutralisation alcalin, on utilise la soude, la potasse, l'hydrogénocarbonate de sodium et/ou l'hydrogénocarbonate de potassium.

8. Procédé suivant l'une quelconque des revendications 1 à 7, caractérisé en ce qu'on ajoute l'amine en solution aqueuse conjointement avec l'agent de neutralisation alcalin.

9. Procédé suivant l'une quelconque des revendications 1 à 7, caractérisé en ce qu'on ajoute séparément l'amine, d'une part, et une solution aqueuse contenant les agents de neutralisation alcalins, d'autre part.

10. Procédé suivant l'une quelconque des revendications 2 à 9, caractérisé en ce qu'on ajoute l'amine ou la solution d'amine à une température allant de 0 à 50°C.